# EUROPÄISCHE PATENTSCHRIFT

(11) **EP 0 907 842 B1**
(45) Veröffentlichungstag und Bekanntmachung des Hinweises auf die Patenterteilung: **23.05.2001**
(21) Anmeldenummer: 97931645.2
(22) Anmeldetag: 24.06.1997
(51) Int. Cl.: F16F 9/02, B62J 1/06

(54) **VORRICHTUNG ZUM AUSLÖSEN EINER GASFEDER**
DEVICE FOR TRIGGERING A GAS SPRING
DISPOSITIF POUR DECLENCHER UN RESSORT A GAZ

(30) Priorität: 04.07.1996 DE 19626844
(43) Veröffentlichungstag der Anmeldung: 14.04.1999
(73) Patentinhaber: WANDSCHNEIDER, Ingeborg, 74909 Meckesheim (DE)
(72) Erfinder: WANDSCHNEIDER, Guido, D-68804 Altlussheim (DE)
(74) Vertreter: Naumann, Ulrich, Dr.-Ing.
(86) Internationale Anmeldenummer: DE9701305
(87) Internationale Veröffentlichungsnummer: WO9801683

(56) Entgegenhaltungen:
- EP-A- 0 549 026
- DE-A- 4 401 980
- DE-U- 29 516 481
- US-A- 5 443 134
- PATENT ABSTRACTS OF JAPAN vol. 018, no. 691 (M-1731), 26.Dezember 1994 & JP 06 272728 A (TOKICO LTD), 27.September 1994,
- PATENT ABSTRACTS OF JAPAN vol. 018, no. 628 (M-1713), 30.November 1994 & JP 06 241257 A (TOKICO LTD), 30.August 1994,

## Beschreibung

Die Erfindung betrifft eine Vorrichtung zum Auslösen einer Gasfeder, mit einer Betätigungseinrichtung und einem mit der Betätigungseinrichtung wirkverbundenen, unmittelbar auf den endseitigen Auslöser der Gasfeder wirkenden Betätigungsorgan, wobei das Betätigungsorgan als kraft- und/oder wegmäßig unter- oder übersetzende Hebelanordnung ausgeführt ist und wobei einer der Hebel - Auslösehebelunmittelbar auf den Auslöser drückt.

Gasfedern sind in den unterschiedlichsten Ausführungsformen aus der Praxis bekannt. Zahlreiche Gasfedern umfassen ein integriertes Ventilsystem, wodurch sich die Gasfeder in jeder Position stufenlos feststellen bzw. blockieren läßt. Dabei ist der Kolben an einem Druckrohr abgedichtet und trennt zwei Gasräume voneinander. Bei geschlossenem Ventil ist die Gasfeder arretiert und ermöglicht eine Blockierung in der gewünschten Position. Durch Betätigung des meist als Auslösestößel ausgeführten Auslösers wird das Ventil geöffnet und die Gasfeder läßt sich so stufenlos positionieren. Die Ausschubgeschwindigkeit und Dämpfung kann dabei durch Wahl der Düse im Kolben entsprechend variiert werden.

Gasfedern der hier in Rede stehenden Art werden unterschiedlichst angewendet. Aus der Praxis bekannt ist die Anwendung solcher Gasfedern in Schreibtischstühlen. Ebenso lassen sich durch Gasfedern Autositze verstellen oder können Teile von Solarien bewegt werden. Auch lassen sich Schreibtische durch Gasfedern höhenverstellen.

Bei den aus der Praxis bekannten Gasfedern ist ein Betätigungsorgan erforderlich, welches mit einer Betätigungseinrichtung wirkverbunden ist und unmittelbar auf den endseitig der Gasfeder vorgesehenen Auslöser wirkt. Dabei werden bspw. bei Schreibtischstühlen Betätigungsorgane verwendet, die in Form einfacher Hebel ausgebildet sind, die i.d.R. mit einem endseitigen Bereich unmittelbar auf den Auslöser drücken. Eine solche Ausgestaltung des Betätigungsorgans hat den enormen Nachteil, daß doch erhebliche Kräfte zum Auslösen der Gasfeder erforderlich sind. Hinzu kommt der weitere Nachteil, daß sich die Auslösung nur schwer dosieren läßt, so daß eine Regulierung der Gasfedergeschwindigkeit bei erheblichen Auslösekräften so gut wie nicht möglich ist.

Aus der EP-A-0 549 026 ist eine Vorrichtung zum Auslösen einer Gasfeder mit allen Merkmalen des Oberbegriffs des Patentanspruchs 1 bekannt. Bei der bekannten Gasfeder ist die Auslösung schwer dosierbar, so dass eine Regulierung der Gasfedergeschwindigkeit bei erheblichen Auslösekräften so gut wie nicht möglich ist.

Der vorliegenden Erfindung liegt daher die Aufgabe zugrunde, eine Vorrichtung zum Auslösen einer Gasfeder derart auszugestalten und weiterzubilden, daß eine einfache und sichere Betätigung bei verringerten Auslösekräften und einer stufenlosen Regulierung der Ausfahrgeschwindigkeit und der Ausfahrposition möglich ist.

Die vorliegende Erfindung löst die zuvor genannte Aufgabe durch die Merkmale des Patentanspruches 1. Danach ist eine Vorrichtung zum Auslösen einer Gasfeder derart ausgebildet, daß der Auslösehebel an einem Ende um eine ortsfeste Drehachse schwenkbar angelenkt und an seinem anderen Ende mit einem zweiten Hebel-Verbindungshebel - an dessen Ende schwenkbar verbunden ist, daß der Verbindungshebel an seinem anderen Ende schwenkbar mit einem dritten Hebel-Betätigungshebel - verbunden ist und daß der Betätigungshebel an einem Ende um eine ortsfeste Drehachse schwenkbar angelenkt und an seinem anderen Ende mit der Betätigungseinrichtung wirkverbunden ist.

Im konkreten ist der Auslösehebel an einem Ende um eine ortsfeste Drehachse schwenkbar angelenkt und an seinem anderen Ende mit einem zweiten Hebel-Verbindungshebel - an dessen Ende schwenkbar verbunden. Der Verbindungshebel ist wiederum an seinem anderen Ende schwenkbar mit einem dritten Hebel-Betätigungshebel - verbunden, wobei der Betätigungshebel wiederum an einem Ende um eine ortsfeste Drehachse schwenkbar angelenkt und an seinem anderen Ende mit der Betätigungseinrichtung wirkverbunden ist. Insgesamt sind im Rahmen einer solchen Ausgestaltung drei Hebel vorgesehen, die bei entsprechendem Verhältnis der Hebelabschnitte einerseits des Auslösehebels und andererseits des Betätigungshebels eine Verringerung der Auslösekraft begünstigen.

In besonders vorteilhafter Weise, insbesondere hinsichtlich besonders günstiger Unter- oder Übersetzungsverhältnisse umfaßt die Hebelanordnung einen Stellmechanismus. Im konkreten könnte die Hebelanordnung einen Exzenter, eine Kurvenscheibe bzw. Nocken oder ein Zahnrad oder gar ein Getriebe umfassen. Jedenfalls läßt sich die Hebelanordnung zur Unter- bzw. Übersetzung beliebig ausgestalten, wobei es hier in erster Linie darauf ankommt, daß die Auslösekräfte verringert werden.

Genauer gesagt könnte das Verhältnis der Hebelabschnitte einerseits des Auslösehebels zwischen ortsfester Drehachse und Auslöser sowie zwischen Auslöser und Schwenkverbindung mit dem Verbindungshebel und andererseits des Betätigungshebels zwischen ortsfester Drehachse und Schwenkverbindung mit dem Verbindungshebel sowie zwischen Schwenkverbindung mit dem Verbindungshebel und freiem Ende bzw. Wirkverbindung mit der Betätigungseinrichtung das Maß der Unter- oder Übersetzung vorgeben.

Hinsichtlich einer konkreten Anordnung des Betätigungsorgans könnte dieses mit der Gasfeder fluchten und in einem sich an den Auslöser anschließenden Rahmen angeordnet sein. Der Rahmen könnte wiederum insgesamt hier vorzugsweise endseitig frei auslaufende Rahmensäulen zur paarweisen Aufnahme der ortsfesten Drehachsen umfassen.

Des weiteren ist es von ganz besonderem Vorteil, wenn der Rahmen derart dimensioniert ist, daß er gemeinsam mit der Gasfeder in ein vorzugsweise rohrförmiges Gehäuse eingeschoben ist. Das Gehäuse könnte am freien Ende des Rahmens mit einem Deckel abgeschlossen sein, so daß dadurch das Gehäuse insgesamt - betätigungsseitig - geschlossen ist.

Wie bereits zuvor erwähnt, wirkt die Betätigungseinrichtung - direkt oder indirekt - über das Betätigungsorgan auf den Auslöser. Im Rahmen einer ersten Ausgestaltungsmöglichkeit könnte die Betätigungseinrichtung elektrisch, vorzugsweise über einen miniaturisierten Stell- oder Schrittmotor, auf das Betätigungssorgan wirken. Im Rahmen einer zweiten Ausgestaltungsmöglichkeit könnte die Betätigungseinrichtung induktiv auf das Betätigungsorgan wirken. Gemäß einer dritten Ausgestaltungsmöglichkeit könnte die Betätigungseinrichtung über einen Magneten - elektrisch arbeitender Hub- oder Druckmagnet - auf das Betätigungsorgan wirken. Ebenso wäre es denkbar, im Rahmen einer weiteren Ausgestaltungsmöglichkeit die Betätigungseinrichtung hydraulisch oder pneumatisch auf das Betätigungsorgan wirken zu lassen. Schließlich ist es insbesondere im Hinblick auf eine besonders einfache Ausgestaltung der erfindungsgemäßen Vorrichtung von Vorteil, wenn die Betätigungseinrichtung über einen Seil- bzw. Bowdenzug auf das Betätigungsorgan wirkt.

Für den Fall der Vorkehrung eines Bowdenzuges könnte dieser endseitig am Betätigungshebel angelenkt sein, bei Zug den Betätigungshebel in Richtung Auslöser schwenken, sich durch den Rahmen hindurch, vorzugsweise innerhalb des Gehäuses an der Gasfeder vorbei erstrecken und schließlich aus dem Gehäuse auf der dem Auslöser entgegengesetzten Ende herausführen und sich schließlich über Führungselemente zur Betätigungseinrichtung erstrecken.

Die Betätigungseinrichtung umfaßt zur einfachen Auslösung einen Hebel, Knopf oder dgl.. Im Falle der Vorkehrung eines Bowdenzuges könnte die Betätigungseinrichtung einen den Bowdenzug endseitig aufnehmenden Hebel umfassen. Jedenfalls läßt sich auf das Betätigungsorgan über einen solchen Hebel einfach zugreifen, so daß komplizierte Konstruktionen nicht erforderlich sind.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Seitenansicht, geschnitten, ein Ausführungsbeispiel einer erfindungsgemäßen Vorrichtung bei unbetätigtem Auslöser der Gasfeder, wobei hier lediglich das Betätigungsorgan und der Auslöser dargestellt sind,
- Fig. 2: in einer schematischen Seitenansicht, geschnitten, ein Ausführungsbeispiel einer erfindungsgemäßen Vorrichtung bei betätigtem Auslöser der Gasfeder, wobei hier lediglich das Betätigungsorgan und der Auslöser dargestellt sind,

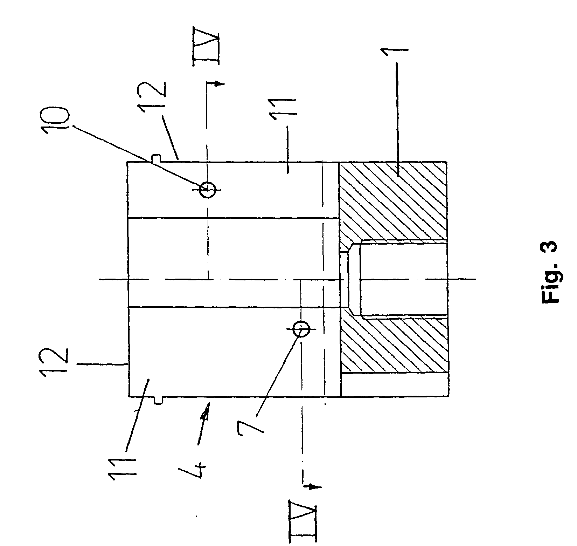

- Fig. 3: in einer Seitenansicht, geschnitten, den Rahmen des Betätigungsorgans ohne Hebelanordnung und

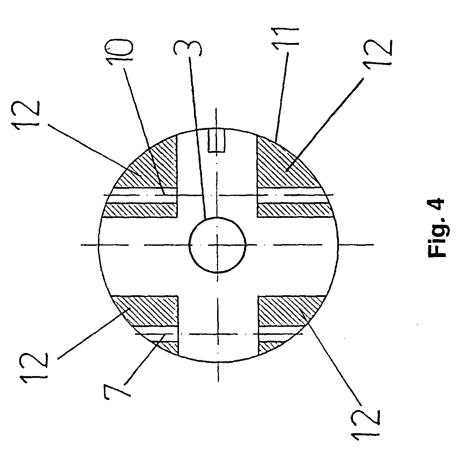

- Fig. 4: den Gegenstand aus Fig. 3 in einer Schnittdarstellung entlang der Linie IV-IV.

Die Figuren zeigen eine Vorrichtung zum Auslösen einer hier nur endseitig dargestellten Gasfeder 1, wobei die Vorrichtung eine hier lediglich angedeutete Betätigungseinrichtung 2 und ein mit der Betätigungseinrichtung 2 wirkverbundenes, unmittelbar auf den endseitigen Auslöser 3 der Gasfeder 1 wirkendes Betätigungsorgan 4 umfaßt.

Erfindungsgemäß ist das Betätigungsorgan 4 als kraft- und/oder wegmäßig unter- oder übersetzende Hebelanordnung ausgeführt, wobei einer der Hebel, der sogenannte Auslösehebel 6, unmittelbar auf den Auslöser 3 drückt.

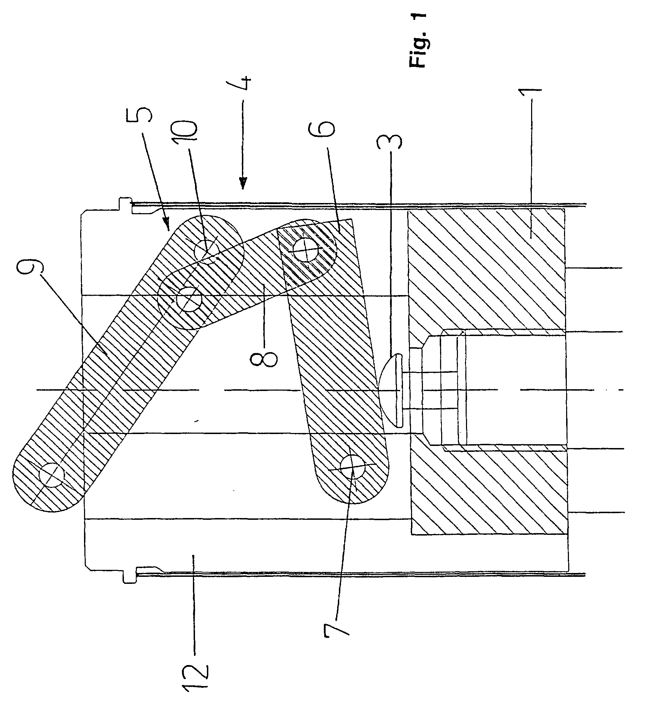

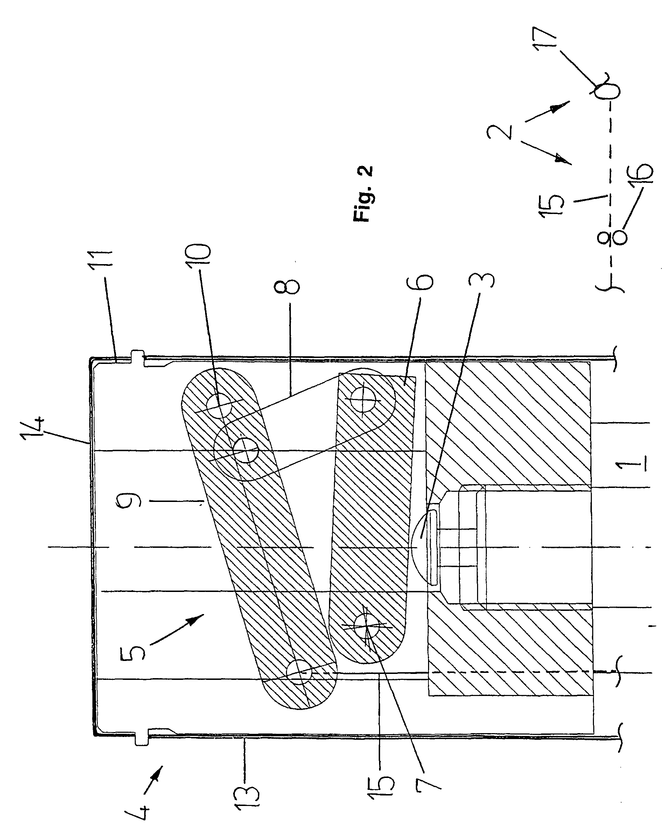

Die Fig. 1 und 2 zeigen besonders deutlich, daß der Auslösehebel 6 an einem Ende um eine ortsfeste Drehachse schwenkbar angelenkt und an seinem anderen Ende mit einem zweiten Hebel, dem sogenannten Verbindungshebel 8, an dessen Ende schwenkbar verbunden ist. Der Verbindungshebel 8 ist an seinem anderen Ende schwenkbar mit einem dritten Hebel, dem sogenannten Betätigungshebel 9, verbunden. Der Betätigungshebel 9 ist an einem Ende um eine ortsfeste Drehachse 10 schwenkbar angelenkt und an seinem anderen Ende mit der Betätigungseinrichtung 2 wirkverbunden.

Das Verhältnis der Hebelabschnitte einerseits des Auslösehebels 6 zwischen ortsfester Drehachse 7 und Auslöser 3 sowie zwischen Auslöser 3 und der Schwenkverbindung mit dem Verbindungshebel 8 und andererseits des Betätigungshebels 9 zwischen ortsfester Drehachse 10 und Schwenkverbindung mit dem Verbindungshebel 8 sowie zwischen Schwenkverbindung mit dem Verbindungshebel 8 und freiem Ende bzw. Wirkverbindung mit der Betätigungseinrichtung 2 gibt das Maß der Unter- oder Übersetzung vor.

Die Figuren lassen insgesamt erkennen, daß das gesamte Betätigungsorgan 4 mit der Gasfeder 1 fluchtet. Des weiteren ist das Betätigungsorgan 4 in einem sich an den Auslöser 3 anschließenden Rahmen 11 angeordnet. Der Rahmen 11 weist insgesamt vier endseitig frei auslaufende Rahmensäulen 12 zur paarweisen Aufnahme der ortsfesten Drehachsen 7 und 10 auf.

Gemeinsam mit der Gasfeder 1 ist der Rahmen 11 in ein rohrförmiges Gehäuse 13 eingeschoben, welches am freien Ende des Rahmens 11 mit einem Deckel 14 abgeschlossen ist.

Hinsichtlich der konkreten Betätigung bzw. Ausgestaltung der Betätigungseinrichtung wird zur Vermeidung von Wiederholungen auf die allgemeine Beschreibung verwiesen. Bei dem hier gewählten Ausführungsbeispiel wirkt die Betätigungseinrichtung 2 über einen Bowdenzug 15 auf das Betätigungsorgan 4. Der Bowdenzug 15 ist endseitig am Betätigungshebel 9 angelenkt und schwenkt den Betätigungshebel 9 - bei Zug - in Richtung Auslöser 3. Der Bowdenzug 15 erstreckt sich durch den Rahmen 11 hindurch innerhalb des Gehäuses 13 an der Gasfeder 1 vorbei und führt aus dem Gehäuse 13 auf der dem Auslöser 3 entgegengesetzten bzw. abgewandten Seite heraus. Schließlich erstreckt sich der Bowdenzug 15 über hier nur angedeutete Führungselemente 16 zur Betätigungseinrichtung 2 hin, wobei dort zur Auslösung eine Art Betätigungshebel 17 vorgesehen sein kann.

Abschließend sei ganz besonders darauf hingewiesen, daß das voranstehend erörterte Ausführungsbeispiel lediglich der Erörterung der beanspruchten Lehre dient, diese jedoch nicht auf das Ausführungsbeispiel einschränkt.

## Patentansprüche

1. Vorrichtung zum Auslösen einer Gasfeder (1), mit einer Betätigungseinrichtung (2) und einem mit der Betätigungseinrichtung (2) wirkverbundenen, unmittelbar auf den endseitigen Auslöser (3) der Gasfeder (1) wirkenden Betätigungsorgan (4), wobei das Betätigungsorgan (4) als kraft- und/oder wegmäßig unter- oder übersetzende Hebelanordnung (5) ausgeführt ist und wobei einer der Hebel - Auslösehebel (6)-unmittelbar auf den Auslöser (3) drückt,
**dadurch gekennzeichnet,** daß der Auslösehebel (6) an einem Ende um eine ortsfeste Drehachse (7) schwenkbar angelenkt und an seinem anderen Ende mit einem zweiten Hebel - Verbindungshebel (8) - an dessen Ende schwenkbar verbunden ist, daß der Verbindungshebel (8) an seinem anderen Ende schwenkbar mit einem dritten Hebel - Betätigungshebel (9) - verbunden ist und daß der Betätigungshebel (9) an einem Ende um eine ortsfeste Drehachse (10) schwenkbar angelenkt und an seinem anderen Ende mit der Betätigungseinrichtung (2) wirkverbunden ist.

2. Vorrichtung nach Anspruch 1, dadurch gekennzeichnet, daß die Hebelanordnung (5) einen Stellmechanismus umfaßt.

3. Vorrichtung nach Anspruch 1 oder 2, dadurch gekennzeichnet, daß die Hebelanordnung (5) einen Exzenter umfaßt.

4. Vorrichtung nach Anspruch 1 oder 2, dadurch gekennzeichnet, daß die Hebelanordnung (5) eine Kurvenscheibe oder Nocken umfaßt.

5. Vorrichtung nach Anspruch 1 oder 2, dadurch gekennzeichnet, daß die Hebelanordnung (5) ein Zahnrad oder ein Getriebe umfaßt.

6. Vorrichtung nach einem der Ansprüche 1 bis 5, dadurch gekennzeichnet, daß das Verhältnis der Hebelabschnitte einerseits des Auslösehebels (6) zwischen ortsfester Drehachse (7) und Auslöser (3) sowie zwischen Auslöser (3) und Schwenkverbindung mit dem Verbindungshebel (8) und andererseits des Betätigungshebels (9) zwischen ortsfester Drehachse (10) und Schwenkverbindung mit dem Verbindungshebel (8) sowie zwischen Schwenkverbindung mit dem Verbindungshebel (8) und freiem Ende bzw. Wirkverbindung mit der Betätigungseinrichtung (2) das Maß der Unter- oder Übersetzung vorgibt.

7. Vorrichtung nach einem der Ansprüche 1 bis 6, dadurch gekennzeichnet, daß das Betätigungsorgan (4) in Flanschbauweise flach ausgeführt ist und ebenfalls flach ausgebildete Mittel zur Befestigung an einem beliebigen Teil aufweist.

8. Vorrichtung nach einem der Ansprüche 1 bis 7, dadurch gekennzeichnet, daß das gesamte Betätigungsorgan (4) mit der Gasfeder (1) fluchtet.

9. Vorrichtung nach einem der Ansprüche 1 bis 8, dadurch gekennzeichnet, daß das Betätigungsorgan (4) in einem sich an den Auslöser (3) anschließenden Rahmen (11) angeordnet ist, wobei der Rahmen (11) insgesamt vier vorzugsweise endseitig frei auslaufende Rahmensäulen (12) zur paarweisen Aufnahme der ortsfesten Drehachsen (7, 10) umfassen kann und gemeinsam mit der Gasfeder (1) in ein vorzugsweise rohrförmiges Gehäuse (13) eingeschoben ist, welches vorzugsweise am freien Ende des Rahmens (11) mit einem Deckel (14) abgeschlossen ist.

10. Vorrichtung nach einem der Ansprüche 1 bis 9, dadurch gekennzeichnet, daß die Betätigungseinrichtung (2) elektrisch, vorzugsweise über einen miniaturisierten Stell- oder Schrittmotor, auf das Betätigungsorgan (4) wirkt.

11. Vorrichtung nach einem der Ansprüche 1 bis 9, dadurch gekennzeichnet, daß die Betätigungseinrichtung (2) induktiv auf das Betätigungsorgan (4) wirkt.

12. Vorrichtung nach einem der Ansprüche 1 bis 9, dadurch gekennzeichnet, daß die Betätigungseinrichtung (2) über einen Magneten - elektisch arbeitender Hub- oder Druckmagnet - auf das Betätigungsorgan (4) wirkt.

13. Vorrichtung nach einem der Ansprüche 1 bis 9, dadurch gekennzeichnet, daß die Betätigungseinrichtung (2) hydraulisch auf das Betätigungsorgan (4) wirkt.

14. Vorrichtung nach einem der Ansprüche 1 bis 9, dadurch gekennzeichnet, daß die Betätigungseinrichtung (2) pneumatisch auf das Betätigungsorgan (4) wirkt.

15. Vorrichtung nach einem der Ansprüche 1 bis 9, dadurch gekennzeichnet, daß die Betätigungseinrichtung (2) über einen Seil- bzw. Bowdenzug (15) auf das Betätigungsorgan (4) wirkt, wobei der Bowdenzug (15) vorzugsweise endseitig am Betätigungshebel (17) angelenkt ist, bei Zug den Betätigungshebel (17) in Richtung Auslöser (3) schwenkt, sich durch den Rahmen (11) hindurch, vorzugsweise innerhalb des Gehäuses (13) an der Gasfeder (1) vorbei erstreckt und schließlich aus dem Gehäuse (13) auf der dem Auslöser (3) entgegengesetzten Ende herausführt und sich schließlich über Führungselemente (16) zur Betätigungseinrichtung (2) erstreckt.

16. Vorrichtung nach einem der Ansprüche 1 bis 15, dadurch gekennzeichnet, daß die Betätigungseinrichtung (2) zur Auslösung einen den Bowdenzug (15) endseitig aufnehmenden Hebel, Knopf oder dergleichen umfaßt.

## Claims

1. Apparatus for activating a pneumatic spring (1), having an activation device (2) and an activation member (4), which is actively connected to the activation device (2) and which acts directly on the trigger (3), located at the end face, of the pneumatic spring (1), the activation member (4) being in the form of a lever arrangement (5), which steps down or steps up in terms of power and/or travel, and one of the levers - trigger lever (6) - pressing directly on the trigger (3), characterised in that the trigger lever (6) is articulated at one end pivotably about a stationary pivot axis (7) and, at the other end thereof, is connected pivotably to the end of a second lever - connection lever (8) - ir that the connection lever (8) is connected at the other end thereof pivotably to a third lever - activation lever (9) - and in that the activation lever (9) is articulated at one end pivotably about a stationary pivot axis (10) and, at the other end thereof, is actively connected to the activation device (2).

2. Apparatus according to claim 1, characterised in that the lever arrangement (5) comprises an adjustment mechanism.

3. Apparatus according to claim 1 or claim 2, characterised in that the lever arrangement (5) comprises an eccentric.

4. Apparatus according to claim 1 or claim 2, characterised in that the lever arrangement (5) comprises an eccentric disc or cam.

5. Apparatus according to claim 1 or claim 2, characterised in that the lever arrangement (5) comprises a toothed wheel or a gear.

6. Apparatus according to any one of claims 1 to 5, characterised in that the ratio of the lever portions dictates the magnitude of the stepping-down or stepping-up at one side of the trigger lever (6) between the stationary pivot axis (7) and the trigger (3) as well as between the trigger (3) and the pivot connection to the connection lever (8) and at the other side of the activation lever (9) between the stationary pivot axis (10) and the pivot connection to the connection lever (8) as well as between the pivot connection to the connection lever (8) and the free end or active connection to the activation device (2).

7. Apparatus according to any one of claims 1 to 6, characterised in that the activation member (4) is formed flat in the manner of a flange and has means, which are likewise flat, for attachment to any component.

8. Apparatus according to any one of claims 1 to 7, characterised in that the whole activation member (4) is flush with the pneumatic spring (1).

9. Apparatus according to any one of claims 1 to 8, characterised in that the activation member (4) is arranged in a frame (11), which abuts the trigger (3), the frame (11) being able to comprise a total of four frame supports (12), which run out freely at the end face, for receiving as a pair the stationary pivot axes (7, 10), and being pushed, together with the pneumatic spring (1), into a preferably tubular housing (13) which is closed by a cover (14) preferably at the free end of the frame (11).

10. Apparatus according to any one of claims 1 to 9, characterised in that the activation device (2) acts on the activation member (4) electrically, preferably via a miniature servomotor or stepping motor.

11. Apparatus according to any one of claims 1 to 9, characterised in that the activation device (2) acts inductively on the activation member (4).

12. Apparatus according to any one of claims 1 to 9, characterised in that the activation device (2) acts on the activation member (4) via a magnet, which is an electrically functioning lifting or pressing magnet.

13. Apparatus according to any one of claims 1 to 9, characterised in that the activation device (2) acts hydraulically on the activation member (4).

14. Apparatus according to any one of claims 1 to 9, characterised in that the activation device (2) acts pneumatically on the activation member (4).

15. Apparatus according to any one of claims 1 to 9, characterised in that the activation device (2) acts on the activation member (4) via a sheathed cable or Bowden cable (15), the Bowden cable (15) preferably being articulated to the end of the activation lever (17) and, when pulled, pivoting the activation lever (17) in the direction of the trigger (3), extending through the frame (11), preferably past the pneumatic spring (1) within the housing (13), and finally leading out of the housing (13) at the end opposite the trigger (3) and ultimately extending via guide elements (16) to the activation device (2).

16. Apparatus according to any one of claims 1 to 15, characterised in that the activation device (2) comprises, for activation, a lever, knob, or the like, which receives the end of the Bowden cable (15).

## Revendications

1. Dispositif pour le déclenchement d'un ressort à gaz (1), avec un dispositif d'actionnement (2) et avec un organe d'actionnement (4) relié opérativement au dispositif d'actionnement, agissant directement sur le déclencheur (3) côté extrémité du ressort à gaz (1), l'organe d'actionnement (4) étant réalisé sous forme d'un ensemble de leviers (5) démultiplicateurs ou surmultiplicateurs en termes de force et/ou de déplacement et l'un des leviers -levier de déclenchement (6)- appuyant directement sur le déclencheur,
caractérisé en ce que le levier de déclenchement (6) est articulé à pivotement à une extrémité autour d'un axe de pivotement (7) fixe et relié à pivotement à son autre extrémité à une extrémité d'un deuxième levier -levier de liaison (8)-, que le levier de liaison (8) est relié à pivotement à son autre extrémité à un troisième levier -levier d'actionnement (9)- et que le levier d'actionnement (9) est articulé à pivotement à une extrémité à un axe de pivotement (10) fixe et est relié opérativement, à son autre extrémité, au dispositif d'actionnement (2).

2. Dispositif selon la revendication 1,
caractérisé en ce que l'ensemble de leviers (5) comporte une unité de commande.

3. Dispositif selon l'une des revendications 1 et 2,
caractérisé en ce que l'ensemble de leviers (5) comporte un excentrique.

4. Dispositif selon l'une des revendications 1 et 2,
caractérisé en ce que l'ensemble de leviers (5) comporte un disque à came ou une came.

5. Dispositif selon l'une des revendications 1 et 2,
caractérisé en ce que l'ensemble de leviers (5) comporte un pignon ou un engrenage.

6. Dispositif selon l'une des revendications 1 à 5,
caractérisé en ce que le rapport des sections de levier, d'une part du levier de déclenchement (6) entre l'axe de pivotement (7) fixe et le déclencheur (3) ainsi qu'entre le déclencheur (3) et la liaison de pivotement avec le levier de pivotement (8), et d'autre part du levier d'actionnement (9) entre l'axe de pivotement (10) fixe et la liaison de pivotement avec le levier de liaison (8) ainsi qu'entre la liaison de pivotement avec le levier de liaison (8) et l'extrémité libre ou respectivement la liaison opérative avec le dispositif d'actionnement (2) prédéfinit la valeur de la démultiplication ou de la surmultiplication.

7. Dispositif selon l'une des revendications 1 à 6,
caractérisé en ce que l'organe d'actionnement (4) est réalisé plat du type flasque et présente un moyen, également réalisé plat, pour la fixation à une pièce quelconque.

8. Dispositif selon l'une des revendications 1 à 7,
caractérisé en ce que l'ensemble de l'organe d'actionnement (4) est aligné avec le ressort à gaz (1).

9. Dispositif selon l'une des revendications 1 à 8,
caractérisé en ce que l'organe d'actionnement (4) est disposé dans un châssis (11) se raccordant au déclencheur (3), le châssis (11) pouvant inclure au total quatre colonnes de châssis (12), de préférence s'étendant librement du côté de l'extrémité, pour la réception par paires des axes de pivotement (7, 10) fixes et étant enfoncé avec le ressort à gaz il) dans un boîtier (13), de préférence tubulaire, qui est de préférence fermé à l'extrémité libre du châssis (11) par un couvercle (14).

10. Dispositif selon l'une des revendications 1 à 9,
caractérisé en ce que le dispositif d'actionnement (2) agit électriquement, de préférence par l'intermédiaire d'un moteur de positionnement ou pas à pas miniaturisé, sur l'organe d'actionnement (4).

11. Dispositif selon l'une des revendications 1 à 9,
caractérisé en ce que le dispositif d'actionnement (2) agit par induction sur l'organe d'actionnement (4).

12. Dispositif selon l'une des revendications 1 à 9,
caractérisé en ce que le dispositif d'actionnement (2) agit sur l'organe d'actionnement (4) par l'intermédiaire d'un aimant -aimant de levage ou de pression travaillant électriquement-.

13. Dispositif selon l'une des revendications 1 à 9,
caractérisé en ce que le dispositif d'actionnement (2) agit hydrauliquement sur l'organe d'actionnement (4).

14. Dispositif selon l'une des revendications 1 à 9,
caractérisé en ce que le dispositif d'actionnement (2) agit pneumatiquement sur l'organe d'actionnement (4).

15. Dispositif selon l'une des revendications 1 à 9,
caractérisé en ce que le dispositif d'actionnement (2) agit sur l'organe d'actionnement (4) par l'intermédiaire d'un câble sous gaine ou respectivement Bowden (15), le câble Bowden (15) étant articulé de préférence du côté extrémité, au levier d'actionnement (17), faisant pivoter par traction le levier d'actionnement (17) en direction du déclencheur (3), s'étendant à travers le châssis (11), de préférence à l'intérieur du boîtier (13), en avant du ressort à gaz (1), et sortant finalement du boîtier (13) à l'extrémité écartée du déclencheur (3) et s'étendant finalement vers le dispositif d'actionnement (2) par l'intermédiaire d'éléments de guidage (16).

16. Dispositif selon l'une des revendications 1 à 15,
caractérisé en ce que le dispositif d'actionnement (2) comporte, pour le déclenchement, un levier, un bouton ou similaire recevant l'un des câbles Bowden (15), du côté de l'extrémité.
